Europäisches Patentamt

European Patent Office

Office européen des brevets

(11) Publication number: **0 212 350**
**B1**

## (12) EUROPEAN PATENT SPECIFICATION

(45) Date of publication of patent specification: **24.10.90**

(51) Int. Cl.⁵: **C 08 F 220/28, C 08 F 230/08**

(21) Application number: **86110362.0**

(22) Date of filing: **28.07.86**

(54) Silicon-containing addition interpolymers from isobornyl (meth)acrylate and coating method.

(30) Priority: **05.08.85 US 762356**
**05.08.85 US 762490**

(43) Date of publication of application:
**04.03.87 Bulletin 87/10**

(45) Publication of the grant of the patent:
**24.10.90 Bulletin 90/43**

(84) Designated Contracting States:
**BE DE FR GB IT SE**

(56) References cited:
**US-A-4 026 826**
**US-A-4 254 248**
**US-A-4 508 884**

(73) Proprietor: **PPG INDUSTRIES, INC.**
**One PPG Place**
**Pittsburgh Pennsylvania 15272 (US)**

(72) Inventor: **Kania, Charles M.**
**535 West Ninth Avenue**
**Tarentum, PA 15084 (US)**

(74) Representative: **Sternagel, Hans-Günther, Dr.**
**et al**
**Patentanwälte Dr. Michael Hann Dr. H.-G.**
**Sternagel Sander Aue 30**
**D-5060 Bergisch Gladbach 2 (DE)**

## Description

This invention relates to addition interpolymers especially useful in coating compositions and to a "color plus clear" system of coating. More particularly, this invention relates to addition interpolymers prepared from isobornyl (meth)acrylate which contain silane groups which interpolymers can be included in coating compositions as the main film former. The resultant coating compositions are curable at low temperatures and are especially useful in the automotive refinish area. The coating compositions are also useful for automotive original equipment finishes where reduced curing temperatures are desired, for example from 150 to 180 degrees F (65 to 85 degrees C). They are especially useful in a "color plus clear" method of coating in which the substrate is coated with one or more applications of a pigmented basecoating composition to form a basecoat which thereafter is coated with one of more applications of an essentially clear topcoating composition to form a topcoat.

The coatings industry has been extensively involved in energy conservation activity for a number of years. Most coating compositions require an elevated temperature of at least about 120 degrees Celsius (degrees C) for curing purposes. This represents a considerable expenditure of energy. Additionally, coating compositions which are intended for use in the automotive refinish area oftentimes are applied under conditions such that the aforementioned elevated temperatures are not available for curing purposes. Ideally, the coating composition which can be cured at relatively low temperatures, for example, below about 82 degrees C, and preferably at ambient temperature, would be most useful. Previous attempts to develop such coating compositions have resulted in compositions which were extremely slow to cure and/or produce films which were deficient in one physical property or another.

In addition to there being a need for a coating composition which is capable of curing at a low temperature, it is also desirable that such compositions be non-isocyanate based.

There are several disadvantages with a number of known "color plus clear" coating systems. After conventional basecoating compositions are applied to the substrate, a rather long period of time, on the order of about 30 minutes or more, may be required between the application of the conventional basecoating composition and the conventional topcoating composition. Such a period is needed to prevent adverse attack by components of the conventional topcoating composition, particularly solvents, on the basecoating composition at the interface of the two, a phenomenon often referred to as strike-in. Strike-in adversely affects the final appearance properties of the coated product. Strike-in is an especially serious problem when metallic-flake pigments are employed in the basecoating composition. Strike-in, among other things, can destroy the desired metallic-flake orientation in the basecoat. Moreover, strike-in can adversely affect the overall clarity and distinctness of image in the resulting cured composite film.

In accordance with this invention, an ambient temperature moisture-curable coating composition has been developed which has an acceptable rate of cure and which, upon curing, produces a film having excellent appearance and durability properties, particularly increased hardness and increased gloss, and surprisingly excellent distinctness of image (DOI). A film having a high degree of distinctness of image when viewed from a direction close to the normal to the surface and under, for example, a light fixture such as a fluorescent light fixture having a cross-hatch grid in front of the bulb, exhibits a reflected image of the lighted fixture in the film which appears clear and sharply distinct and which appears to originate deep in the film. Moreover, an excellent "color plus clear" method of coating has been developed according to the invention utilizing compositions of the invention.

### Summary of the Present Invention

The present invention is directed to an addition interpolymer (vinyl type) containing at least one silicon atom directly bonded to a hydrolyzable group in which the addition interpolymer is derived from a mixture of copolymerizable ethylenically unsaturated monomers containing an isobornyl group-containing monomer selected from the group consisting of isobornyl methacrylate, isobornyl acrylate and a mixture thereof. The amount of the isobornyl group-containing monomer ranges from 10 to 60 percent by weight based on the total weight of the mixture of copolymerizable ethylenically unsaturated monomers.

A preferred embodiment of the present invention is directed to an addition interpolymer containing alkoxy silane moieties and/or acyloxy silane moieties prepared by reaction of a mixture of monomers containing (i) one or more, typically at least two, ethylenically unsaturated monomers which do not contain silicon atoms, hereinafter referred to for convenience as ethylenically unsaturated silicon-free monomers, comprising isobornyl (meth)acrylate, and (ii) a copolymerizable ethylenically unsaturated alkoxy silane monomer and/or a copolymerizable ethylenically unsaturated acyloxy silane monomer.

An addition interpolymer of the invention preferably has a peak molecular weight, as determined by gel permeation chromatography, of from about 2,000 to about 20,000 and a calculated glass transition temperature (Tg) of at least about 25 degrees C. As used herein "isobornyl (meth)acrylate" for convenience is intended to refer to isobornyl methacrylate and/or isobornyl acrylate.

The present invention is also directed to a coating composition comprising an addition interpolymer of the invention either as the sole film-forming resin or in combination with another film-forming thermoplastic and/or thermosetting resin. A coating composition of the invention may be cured with heat or at ambient temperature in the presence of moisture. An advantage of preferred compositions of the invention is that they can be moisture-cured at ambient (room) temperature. A distinct advantage of compositions of the invention is that they can be cured to films not only having improved hardness but also unexpectedly excellent gloss and distinctness of image (DOI) when compared to addition interpolymers prepared without utilizing isobornyl (meth)acrylate.

Addition interpolymers of the present invention have been found to provide a number of advantages when utilized in a topcoating composition which hardens or cures to form a clear topcoat in a coating system known as "color plus clear".

The present invention also provides a method of coating a substrate comprising the steps of (a) forming a basecoat by coating the substrate with one or more applications of a pigmented basecoating composition; and (b) thereafter forming a topcoat by coating the basecoat with one or more applications of an essentially clear topcoating composition; wherein the basecoating composition and/or the topcoating composition comprises an addition interpolymer of the invention.

Detailed Description of the Invention

The ethylenically unsaturated silicon-free monomers employed in making the interpolymer contain at least one ethylenic carbon to carbon double bond. The ethylenically unsaturated silicon-free monomers contain isobornyl (meth)acrylate as a comonomer. Moreover, isobornyl (meth)acrylate may be used as the only ethylenically unsaturated silicon-free monomer.

An addition interpolymer of the invention may be prepared by various methods. For example, the addition interpolymer may be prepared by hydrosilylation of an isobornyl group-containing addition interpolymer containing carbon-carbon double bonds with a hydrosilane examples of which hydrosilanes include halogenated silanes such as methyldichlorosilane, trichlorosilane, and phenyl dichlorosilane; alkoxysilanes such as methyldiethoxysilane, methyldimethoxysilane, phenyldimethoxysilane, trimethoxysilane, and triethoxysilane; acyloxy silanes such as methyldiacetoxysilane, phenyldiacetoxysilane, and triacetoxysilane; ketoxymate silanes such as bis(dimethylcyclohexylketoxymate)methylsilane, and bis(cyclohexylketoxymate)methylsilane; alkenyloxysilanes such as methyldiisopropenoxysilane, and triisopropenoxysilane; and other silanes such as methyldiaminoxysilane, triaminoxysilane, methyldiaminosilane and triaminosilane. The carbon-carbon double bonds can be incorporated into the addition interpolymer by employing compounds such as allyl compounds examples of which include allyl acrylate and allyl methacrylate. The reaction of the hydrosilane with the isobornyl group-containing addition interpolymer containing carbon-carbon double bonds employs a catalyst of a transition metal complex, examples of which transition metals include platinum, rhodium, cobalt, palladium and nickel. Reference can be made to U.S. Patents Nos. 4,191,713 and 4,399,261 regarding process conditions for carrying out hydrosilylation reactions.

As indicated above, a preferred addition interpolymer of the invention is formed from at least two components, i.e., one or more ethylenically unsaturated silicon-free monomers and an ethylenically unsaturated compound selected from an alkoxysilane monomer, an acyloxysilane monomer or a mixture thereof. The term "ethylenically unsaturated" is employed in a broad sense and is intended to encompass, for example, vinyl compounds, acrylic compounds and methacrylic compounds. The basic criteria with respect to the ethylenically unsaturated monomer are that it contains at least one ethylenic carbon to carbon double bond, that it is copolymerizable without gelation with the silane monomer component, and that it does not otherwise preclude the utilization of the finished interpolymer.

In addition to isobornyl (meth)acrylate, another ethylenically unsaturated silicon-free monomer can be, and typically is employed in forming the addition interpolymer of the invention. Examples of suitable ethylenically unsaturated silicon-free monomers for preparing the addition interpolymer herein include the alkyl acrylates, preferably containing from 1 to 12 carbon atoms in the alkyl group such as methyl acrylate, ethyl acrylate, butyl acrylate, propyl acrylate, and 2-ethylhexyl acrylate; the alkyl methacrylates, preferably containing from 1 to 12 carbon atoms in the alkyl group such as methyl methacrylate, butyl methacrylate, 2-ethylhexyl methacrylate, decyl methacrylate, and lauryl methacrylate; and unsaturated nitriles, such as acrylonitrile, methacrylonitrile and ethacrylonitrile. Still other ethylenically unsaturated monomers which can be used include: vinyl aromatic hydrocarbons such as styrene, alpha methyl styrene, and vinyl toluene; vinyl acetate; vinyl chloride; and epoxy functional monomers such as glycidyl methacrylate.

In practice, in order to produce desirable properties in the interpolymer, it is preferred to use combinations of ethylenically unsaturated silicon-free monomers which form hard polymer segments, such as styrene, vinyl toluene and alkyl methacrylates having from 1 to 4 carbon atoms in the alkyl group with monomers which form soft polymer segments, such as the alkyl esters of acrylic or methacrylic acid, the alkyl groups having from 1 to 13 carbon atoms in the case of acrylic esters and from 5 to 16 carbon atoms in the case of methacrylic esters. Illustrative of monomers which form soft polymer segments are ethyl acrylate, butyl acrylate, 2-ethylhexyl acrylate, 2-ethylhexyl methacrylate, decyl methacrylate, and lauryl methacrylate. In addition to the hardening and softening monomers, as previously indicated, other monomers such as vinyl acetate, vinyl chloride, vinyl toluene, and acrylonitrile may be included to achieve specific properties in the interpolymer. The interpolymer is formed from 50 percent to 95 percent, preferably from 70 percent to 90 percent by weight of the ethylenically unsaturated silicon-free monomers based on the total weight of all monomers utilized for preparing the interpolymer. The amount of isobornyl (meth)acrylate for preparing the addition interpolymer of the invention ranges from 10 percent to 60 percent by weight based on the total weight of all monomers utilized for preparing the interpolymer and thus includes, for example, the total weight of (i) the ethylenically unsaturated monomers which do not contain silicon atoms, i.e., the ethylenically unsaturated silicon-free monomers, and (ii) the copolymerizable ethylenically unsaturated alkoxy silane monomer and/or the copolymerizable ethylenically unsaturated acyloxy silane monomer. Advantages obtainable in cured films from addition interpolymers prepared from less than 10 percent by weight of isobornyl (meth)acrylate, based on the aforesaid total weight of all monomers utilized for preparing the interpolymer, fall off markedly when less than the aforesaid 10 percent by weight of isobornyl (meth)acrylate is utilized. Preferred interpolymers of the invention are prepared utilizing from 40 percent to 20 percent by weight of isobornyl (meth)acrylate based on the total weight of all monomers utilized for preparing the interpolymer.

The other component of the addition interpolymer is an organosilane compound, which in a preferred embodiment of the invention is an ethylenically unsaturated alkoxysilane, an ethylenically unsaturated acyloxysilane or a mixture thereof. Alkoxysilanes which can suitably be employed and are preferred are the acrylatoalkoxysilanes, such as gamma-acryloxypropyltrimethoxysilane and gamma-acryloxypropyldimethoxymethylsilane, as well as the methacrylatoalkoxysilanes, such as gamma-methacryloxypropyltrimethoxysilane, gamma-methacryloxypropyltriethoxysilane, gamma-methacryloxypropyldimethoxymethylsilane and gamma-methacryloxypropyltris(2-methoxyethoxy)silane. Among the above listed alkoxysilanes, gamma-methacryloxypropyltrimethoxysilane is especially preferred because of its greater reactivity. Examples of other alkoxysilanes which may be employed include the vinylalkoxysilanes such as vinyltrimethoxysilane, vinyltriethoxysilane and vinyltris(2-methoxyethoxy)silane. Examples of ethylenically unsaturated acyloxysilanes which may be employed include acrylato-, methacrylato- and vinylacetoxysilanes, such as vinylmethyldiacetoxysilane, acrylatopropyltriacetoxysilane, and methacrylatopropyltriacetoxysilane. The interpolymer preferably is formed from 10 percent to 30 percent by weight of the above described ethylenically unsaturated silane monomer based on the total weight of all monomers utilized for preparing the interpolymer.

The preferred addition interpolymer is formed by interpolymerizing the ethylenically unsaturated silicon-free monomers with the ethylenically unsaturated silane monomers in the presence of a vinyl polymerization initiator. The preferred initiators are azo compounds such as, for example, alpha alpha'-azobis(isobutyronitrile); peroxides such as benzoyl peroxide and cumene hydroperoxide; and tertiary butyl peracetate, isopropyl percarbonate, butyl isopropyl peroxy carbonate and similar compounds. The quantity of initiator employed can be varied considerably; however, in most instances, it is desirable to utilize from about 0.1 to about 10 percent based on the weight of monomer solids. A chain modifying agent or chain transfer agent is ordinarily added to the polymerization mixture. The mercaptans, such as dodecyl mercaptan, tertiary dodecyl mercaptan, octyl mercaptan, hexyl mercaptan and mercaptoalkyl trialkoxysilanes, e.g., 3-mercaptopropyltrimethoxysilane, may be used for this purpose as well as other chain transfer agents such as cyclopentadiene, allyl acetate, allyl carbamate, and mercaptoethanol. The mercaptoalkyl trialkoxysilanes have been found to be especially useful where increased durability is needed. Thus, a mercaptoalkyl trialkoxysilane at a level of 0.5 to 15 parts by weight per 100 parts by weight of monomers previously has been found to increase the durability of a coating based on an addition interpolymer.

Addition interpolymers of the invention may be prepared having a wide range of molecular weights. However, typically an interpolymer of the invention has a peak molecular weight, as determined by gel permeation chromatography, of from 2,000 to 20,000, preferably from 2,000 to 15,000, and most preferably from 2,000 to 10,000 when the addition interpolymer is utilized in a coating composition.

For certain "color plus clear" coatings applications it is preferable that the peak molecular weight, as determined by gel permeation chromatography, of the addition interpolymer when in the pigmented basecoating composition be at least 2,000, more preferably at least 10,000. If the peak molecular weight is low, the time required for drying or curing the basecoating composition to a degree at least sufficient to allow application of the topcoating composition without undesirable strike-in may be undesirably long for certain coatings applications. Just one advantage of the method of the invention utilizing the addition interpolymer for the basecoating composition is that the topcoating composition typically can be applied to the basecoat after the basecoat has remained at ambient temperature in atmospheric moisture for a short period of time, sometimes as short as 2 minutes, without, for example, the topcoating composition undesirably striking-in to the basecoat. Often, the peak molecular weight, as determined by gel permeation chromatography, of the addition interpolymer when in the pigmented basecoating composition is in a range of from 2,500 to 40,000, preferably from 10,000 to 20,000.

On the other hand, if the peak molecular weight of the addition interpolymer of the basecoating composition is high, for example greater than 20,000, the spray application properties of the composition at a desirably high solids content may be undesirably affected. However while a basecoating composition containing the addition interpolymer can be applied by any conventional method such as brushing, dipping, flow coating, roll coating, spraying, etc., an advantage of the method of the present invention is that, where desired, it allows a basecoating composition containing addition interpolymer to be spray applied at a high solids content, i.e., 40 percent by weight total solids, preferably 50 percent by weight total solids and higher, when the basecoating composition has a No. 4 Ford Cup viscosity of 25 seconds or less. Moreover, conventional spraying techniques and equipment can be utilized.

When the topcoating composition contains an addition interpolymer, the peak molecular weight of the addition interpolymer as determined by gel permeation chromatography typically is at least about 2,000, and often is in a range of from 2,000 to 20,000, preferably from 3,000 to 15,000, and more preferably from 4,000 to 10,000. The peak molecular weight of an addition interpolymer for the topcoating composition typically can be rather low since the degree of cure to prevent, for example, strike-in is not an important consideration with respect to the topcoating composition.

The polymerization reaction for preparing an addition interpolymer of the invention is carried out in an organic solvent medium utilizing conventional solution polymerization procedures which are well known in the addition polymer art as illustrated with particularity in, for example, U.S. Patents 2,978,437; 3,079,434 and 3,307,963. Organic solvents which may be utilized in the polymerization of the monomers include virtually any of the organic solvents heretofore employed in preparing conventional acrylic or vinyl polymers such as, for example, alcohols, ketones, aromatic hydrocarbons or mixtures thereof. Illustrative of organic solvents of the above type which may be employed are alcohols such as lower alkanols containing 2 to 4 carbon atoms including ethanol, propanol, isopropanol, and butanol; ether alcohols such as ethylene glycol monoethyl ether, ethylene glycol monobutyl ether, propylene glycol monomethyl ether, and dipropylene glycol monoethyl ether; ketones such as methyl ethyl ketone, methyl N-butyl ketone, and methyl isobutyl ketone; esters such as butyl acetate; and aromatic hydrocarbons such as xylene, toluene, and naphtha.

Choice of the specific ethylenically unsaturated silicon-free monomers and ethylenically unsaturated silane monomers typically is made such that the addition interpolymer has a calculated glass transition temperature (Tg) of at least 25 degrees C, preferably from 30 degrees C to 120 degrees C. The Tg is calculated using a generally known equation as found, for example, in "Fundamentals Of Acrylics" by W.H. Brendley, Jr., *Paint And Varnish Production*, Vol. 63 No. 7, July 1973, Pages 19—27. If the glass transition temperature of the addition interpolymer is too low, for example less than 25 degrees C, the physical properties of the cured films for protective coatings applications are adversely affected. Such physical properties include, for example, the gloss retention of the films which is a measure of long term durability, the mar resistance of the films, the abrasion resistance of the films, and the desired hardness of the films for protective coatings applications. It has been found that films prepared from the addition interpolymers of the present invention employing an appropriate level of isobornyl (meth)acrylate as set forth infra, not only exhibit an excellent degree of hardness, but also provide unexpectedly superior appearance properties such as excellent gloss and exceptional distinctness of image, (DOI). Moreover, it has been found that not only can cured films having an excellent combination of physical and appearance properties be prepared from the addition interpolymers of the invention when cured at ambient temperature (room temperature) for about 24 hours, but that cured films having comparable physical and appearance properties (immediately after baking) can be prepared from the addition interpolymers of the invention when baked for about 1 hour or less, typically for about ½ hour or less, at from 150 to 280 degrees F (65 to 138 degrees C). One of the problems with cured films prepared from known silane addition interpolymers, even when prepared utilizing a monomer such as methyl methacrylate, has been low hardness immediately following either cure at ambient temperature for 24 hours or immediately following baking at elevated temperature for about ½ hour which hardness is undesirably low for various high performance coatings applications such as for automotive refinish or automotive original equipment applications.

The addition interpolymers of the invention have utility as film formers in coating systems. Typically, such a coating system contains the interpolymer, an effective amount of a cure-promoting catalyst and, for application purposes, often a solvent. The cure-promoting catalyst may be: an organic acid, such as, for example, p-toluenesulfonic acid, and n-butylphosphoric acid; a metallic salt of an organic acid, such as, for example, tin naphthenate, tin benzoate, tin octoate, tin butyrate, dibutyltin dilaurate, dibutyltin diacetate, iron stearate, and lead octoate; an organic base, such as, for example, isophorone diamine, methylene dianiline, and imidazole; a compound containing a fluoride ion such as tetrabutyl ammonium fluoride, benzyl trimethyl ammonium fluoride, sodium fluoride, potassium fluoride and cesium fluoride; or a mixture thereof.

The specific amounts of cure-promoting catalyst which are included in the compositions of the invention vary considerably depending upon factors such as the rate of cure desired, the specific composition of the interpolymer component, the amount of moisture present in the ambient atmosphere and the like. However, in general, the coating compositions of the invention may contain from about 0.01 parts to about 5 parts by weight of cure-promoting catalyst based on 100 parts by weight of interpolymer solids.

In addition to the foregoing components, the compositions of this invention may contain optional ingredients, including various pigments of the type ordinarily utilized in coatings of this general class. In addition, various fillers; plasticizers; antioxidants; mildewcides and fungicides; surfactants; various flow control agents including, for example, thixotropes and additives for sag resistance and/or pigment orientation based on polymer microparticles (sometimes referred to as microgels) described for example in U. S. Patents 4,025,474; 4,055,607; 4,075,141; 4,115,472; 4,147,688; 4,180,489; 4,242,384; 4,268,547; 4,220,679; and 4,290,932 and other such formulating additives may be employed in some instances. A composition of the invention is ordinarily contained in an organic solvent which may be any solvent or solvent mixture in which the materials employed are compatible and soluble to the desired extent. It has been found previously that a primary thiol, e.g., dodecylmercaptan, isooctylthioglycolate, and the

EP 0 212 350 B1

mercaptoalkyl trialkoxysilanes such as gamma-mercaptopropyltrimethoxysilane, when included in a coating composition based on a silane addition interpolymer, enhances the gloss of the cured coating and such components for enhancing gloss optionally may be included in a composition of the present invention. When a primary thiol is utilized in a composition of the invention a level of about 0.1 parts by weight to about 5 parts by weight primary thiol per 100 parts by weight interpolymer provides this enhanced gloss effect. However, it has been found that compositions of the present invention based on the addition interpolymers of the invention prepared utilizing an appropriate level of isobornyl (meth)acrylate can be cured to provide films having in addition to excellent durability properties, unexpectedly excellent appearance properties such as high gloss and exceptional distinctness of image when compared to silane addition interpolymers prepared without employing an effective level of isobornyl (meth)acrylate. Moreover, the benefits with respect to appearance of cured films from compositions of the invention, can be obtained without the utilization of such gloss enhancing additives as the aforesaid primary thiols.

Compositions of the invention can be applied to a substrate by any conventional method such as brushing, dipping, flow coating, roll coating, and spraying. Typically they are most often applied by spraying. One advantage of the interpolymers of the invention is in their ability to be spray applied at a high solids concentration, i.e., 40 percent total solids, preferably 50 percent total solids and greater when the viscosity of the composition containing the interpolymer is 25 seconds or less on a No. 4 Ford Cup Conventional spay techniques and equipment can be utilized. The compositions may be applied over a wide variety of substrates such as wood, metals, glass, cloth, plastics, foams and the like, as well as over primers.

As indicated, the coating compositions of this invention can be cured by heating or typically by exposure to atmospheric moisture at ambient temperature. Thus once the interpolymer component and cure-promoting catalyst component are brought in contact with each other, as by admixing, and exposed to the ambient atmosphere, the composition will begin to cure. Accordingly, it is desirable in some instances to prepare the compositions of this invention in the form of a two package system, i.e., one package containing the interpolymer component along with any desired optional ingredients and a second package containing the cure-promoting catalyst component. The interpolymer component of the composition in the absence of the cure-promoting catalyst exhibits good pot life i.e., 6 months or more when stored at temperatures of 120 degrees Fahrenheit (F), i.e., 48.9 degrees C, or less. When it is desired to coat a substrate with the composition, the components of the two packages are merely mixed together just prior to application and the resulting composition applied to the substrate by one of the methods such as those described above.

The compositions of this invention have utility in general coating applications and can also be useful in specialty applications such as automotive paints including paints for automobile refinishing. The addition interpolymers of the present invention have been found to be especially useful in a so-called "color plus clear" method of coating which method is a subject of a copending application to C. Kania referred to previously herein.

As indicated previously, a coating composition of the invention can comprise an addition interpolymer of the invention either as the sole film-forming resin or optionally in combination with an additional film-forming thermoplastic and/or thermosetting resin. Examples of such additional film-forming thermoplastic and/or thermosetting resins include the generally known cellulosics, acrylics, aminoplasts, urethanes, polyesters, polyethers, epoxies or mixtures thereof. With respect to the "color plus clear" method of coating, when only one of the basecoating and topcoating compositions contains an addition interpolymer of the invention, the other contains a film-forming resin typically selected from the generally known cellulosics, acrylics, aminoplasts, urethanes, polyesters, epoxies or mixtures thereof mentioned immediately above.

Pigments suitable for a composition of the invention include a wide variety of pigments generally known for use in coating compositions. Suitable pigments include both metallic flake pigments and various white and colored pigments.

Examples of metallic-flake pigments include generally known metallic flakes such as aluminum flakes, nickel flakes, tin flakes, silver flakes, chromium flakes, stainless steel flakes, gold flakes, copper flakes and combinations thereof. Examples of white and colored pigments include generally known pigments based on metal oxides; metal hydroxides; metal sulfides; metal sulfates; metal carbonates; carbon black; china clay; phthalo blues and green, organo reds, and other organic dyes.

Coating compositions of the invention based on the addition interpolymers of the invention provide cured films having an excellent combination of properties such as the hardness required for automotive coatings both for original equipment automotive applications and automotive refinishing applications, good solvent resistance, high initial gloss, excellent gloss retention, as well as exceptionally good distinctness of image. Appearance properties such as, for example, high gloss and distinctness of image are particularly critical for films required in high performance coatings applications as exist, for example, in both the automotive original equipment and automotive refinish industries.

The Examples which follow are submitted for the purpose of further illustrating the nature of the present invention and should not be regarded as a limitation on the scope thereof.

As used in the body of the specification, examples, and claims, all percents, ratios and parts are by weight unless otherwise specifically indicated. As used herein, "pbw" stands for "parts by weight".

6

Glass transition temperatures, where given for the acrylic silane addition interpolymers in the following examples, are calculated using a generally known equation as found, for example, in "Fundamentals of Acrylics" by W. H. Brendley, Jr., *Paint and Varnish Production*, Vol. 63 No. 7, July 1973, pages 19—27. In these calculations values of 110 degrees C and 125 degrees C are used for the glass transition temperatures of homopolymers of gamma-methacryloxypropyl trimethoxy silane and isobornyl methacrylate respectively.

## Example 1

The following monomers are used to make an addition interpolymer of the invention:

|  | Percent by Weight |
| --- | --- |
| Isobornyl methacrylate | 40.0 |
| Butyl methacrylate | 20.0 |
| Butyl acrylate | 20.0 |
| Gamma-methacryloxy-propyltrimethoxysilane | 20.0 |

A reaction vessel equipped with condenser, stirrer, thermometer and means for maintaining a nitrogen blanket is charged with 428 grams (g) of butyl acetate and heated to reflux, about 125 degrees C, while under a nitrogen blanket and agitation. Three feeds identified herein as A, B, and C are next gradually and simultaneously added to the vessel over a period of two hours while the contents of the vessel are maintained at reflux conditions. Feed A consists of a mixture of 928 g isobornyl methacrylate, 464 g butyl methacrylate, 464 g butyl acrylate, and 464 g gamma-methacryloxypropyltrimethoxysilane. Feed B consists of a mixture of 254 g of butyl acetate and 116 g 2,2'-azobis-(2-methyl butane nitrile) available as VAZO—67 from E.I. DuPont de Nemours and Company. Feed C consists of 154 g butyl acetate and 116 g gamma-mercaptopropyltrimethoxysilane. After the addition of the three feeds A, B, and C is complete, a mixture of 22 g butyl acetate and 9.28 g of VAZO—67 is added all at once to the vessel and the contents of the vessel held at reflux for 1 hour. Next, another mixture of 22 g butyl acetate and 9.28 g of the VAZO—67 is added all at once to the vessel and the contents of the vessel thereafter held at reflux for an additional 1½ hours after which period heating is discontinued.

The resultant product is an addition interpolymer of the invention.

The resultant product has a theoretical total solids content of 72.5 percent by weight, an experimentally determined total solids content at 110 degrees C for 1 hour of 71.15 percent by weight, a Gardner Holdt bubble tube viscosity of G—H, a color value of 1, and acid value of 0.1, and a peak molecular weight of the addition interpolymer of 2685 as determined by gel permeation chromatography using a polystyrene standard. Analysis of the resultant product shows a content of butyl methacrylate of 0.49 percent by weight, a content of butyl acrylate of 0.19 percent by weight, and a content of isobornyl methacrylate of 1.16 percent by weight.

## Example 2

This example illustrates the preparation of an addition interpolymer for use in the basecoating composition and in a clearcoating composition of Example 9.

The following monomers are used to make the addition interpolymer:

|  | Percent by Weight |
| --- | --- |
| Methyl methacrylate | 40.0 |
| Styrene | 25.0 |
| Butyl acrylate | 10.0 |
| Butyl methacrylate | 10.0 |
| Gamma-methacryloxy-propyltrimethoxysilane | 15.0 |

A reaction vessel equipped with condenser, stirrer, thermometer and means for maintaining a blanket is charged with 336 g of butyl acetate, 144.0 g of VM & P naphtha, and 96.0 g of toluene ar to reflux, about 125 degrees C, while under a nitrogen blanket and agitation. Three feeds identif as A, B, and C are next gradually and simultaneously added to the vessel over a period of two h the contents of the vessel are maintained at reflux conditions. Feed A consists of a mixture of ethylhexyl methacrylate, 224.0 g butyl methacrylate, 224.0 g butyl acrylate, 560.0 g styrene, ;

gamma-methacryloxypropyltrimethoxysilane. Feed B consists of a mixture of 192.0 g of butyl acetate and 112.0 g di-tertiarybutyl peroxide. Feed C consists of 192.0 g butyl acetate and 112.0 g gamma-mercaptopropyl trimethoxysilane. After the addition of the three feeds A, B, and C is complete, 8.96 g of di-tertiarybutyl peroxide is added all at once to the vessel and the contents of the vessel held at reflux for 1 hour. Next, 8.96 g of the di-tertiarybutyl peroxide is added all at once to the vessel and the contents of the vessel thereafter held at reflux for an additional $1\frac{1}{2}$ hours after which period heating is discontinued and the contents of the vessel allowed to cool to room temperature. The resultant product is a silane addition interpolymer.

The resultant product has a theoretical total solids content of 70 percent by weight, an experimentally determined total solids content at 150 degrees C for 1 hour of 71.15 percent by weight, a Gardner Holdt bubble tube viscosity of Z—2 +, an acid value of 0.09, and a peak molecular weight of the silane addition interpolymer of 7800 and a weight average molecular weight of 10,000 both determined by gel permeation chromatography using a polystyrene standard. Analysis of the resultant product shows an undetectable amount of styrene, a content of butyl methacrylate of 0.09 percent by weight, a content of butyl acrylate of 0.06 percent by weight, and a content of methyl methacrylate of 0.4 percent by weight.

## Example 3

The following monomers are used to make an addition interpolymer of the invention:

| | Percent by Weight |
|---|---|
| Isobornyl methacrylate | 40.0 |
| Butyl methacrylate | 20.0 |
| Methyl methacrylate | 20.0 |
| Gamma-methacryloxy-propyltrimethoxysilane | 20.0 |

A 4-neck flask equipped with condenser, stirrer, thermometer, 3 dropping funnels, and means for maintaining a nitrogen blanket is charged with 428 g of butyl acetate and heated to reflux, about 125 degrees C, while under a nitrogen blanket and agitation. Three feeds identified herein as A, B, and C are next gradually and simultaneously added to the vessel over a period of two hours while the contents of the vessel are maintained at reflux conditions. Feed A consists of a mixture of 928 g isobornyl methacrylate, 464 g butyl methacrylate, 464 g methyl methacrylate, and 464 g gamma-methacryloxypropyltrimethoxysilane. Feed B consists of a mixture of 254 g of butyl acetate and 116 g 2,2'-azobis-(2-methyl butane nitrile) available as VAZO—67 from E.I. DuPont de Nemours and Company. Feed C consists of 154 g butyl acetate and 116 g gamma-mercaptopropyltrimethoxysilane. After the addition of the three feeds A, B, and C is complete, a mixture of 22 g butyl acetate and 9.28 g VAZO—67 is added all at once to the vessel and the contents of the vessel held at reflux for 1 hour. Next, another mixture of 22 g butyl acetate and 9.28 g of the VAZO—67 is added all at once to the vessel and the contents of the vessel thereafter held at reflux for an additional $1\frac{1}{2}$ hours after which period heating is discontinued and the contents of the vessel allowed to cool to room temperature.

The resultant product is an addition interpolymer of the invention.

The resultant product has a theoretical total solids content of 72.5 percent by weight, an experimentally determined total solids content at 110 degrees C for 1 hour of 67.4 percent by weight, an experimentally determined total solids content at 150 degrees C for 1 hour of 66.0 percent by weight, a Gardner Holdt bubble tube viscosity of S, an acid value of 0, and a peak molecular weight of the addition interpolymer of 2900 as determined by gel permeation chromatography using a polystyrene standard. Analysis of the resultant product shows a content of butyl methacrylate of 0.86 percent by weight, a content of methyl methacrylate of 0.67 percent by weight, and a content of isobornyl methacrylate of 2.60 percent by weight.

## Example 4

The following monomers are used to make an addition interpolymer of the invention:

| | Percent by Weight |
|---|---|
| Isobornyl methacrylate | |
| Styrene | 20.0 |
| Butyl methacrylate | 20.0 |
| Methyl methacrylate | 20.0 |
| Gamma-methacryloxy-propyltrimethoxysilane | 20.0 |
| | 20.0 |

A 4-neck flask equipped with condenser, stirrer, thermometer, 3 dropping funnels, and means for maintaining a nitrogen blanket is charged with 440.0 g of butyl acetate and heated to reflux, about 125 degrees C, while under a nitrogen blanket and agitation. Three feeds identified herein as A, B, and C are next gradually and simultaneously added to the vessel over a period of two hours while the contents of the vessel are maintained at reflux conditions. Feed A consists of a mixture of 464.0 g isobornyl methacrylate, 464.0 g styrene, 464.0 g butyl methacrylate, 464.0 g methyl methacrylate, and 464.0 g gamma-methacryloxypropyltrimethoxysilane. Feed B consists of a mixture of 264.0 g of butyl acetate and 116 g 2,2'-azobis-(2-methyl butane nitrile) available as VAZO—67 from E.I. DuPont de Nemours and Company. Feed C consists of 132.0 g butyl acetate and 116.0 g gamma-mercaptopropyltrimethoxysilane. After the addition of the three feeds A, B, and C is complete, a mixture of 22 g butyl acetate and 9.28 g VAZO—67 is added all at once to the vessel and the contents of the vessel held at reflux for 1 hour. Next, another mixture of 22 g butyl acetate and 9.28 g of the VAZO—67 is added all at once to the vessel and the contents of the vessel thereafter held at reflux for an additional 1½ hours after which period heating is discontinued and the contents of the vessel allowed to cool to room temperature.

The resultant product is an addition interpolymer of the invention.

The resultant product has a theoretical total solids content of 72.5 percent by weight, an experimentally determined total solids content at 150 degrees C for 1 hour of 67.4 percent by weight, a viscosity of 8.28. Stokes, an acid value of 0.02, a color value of 1, and a peak molecular weight of the addition interpolymer of 3143 as determined by gel permeation chromatography using a polystyrene standard. Analysis of the resultant product shows a content of butyl methacrylate of 0.62 percent by weight, a content of methyl methacrylate of 0.50 percent by weight, a content of isobornyl methacrylate of 0.69 percent by weight and a content of styrene of 0.03 percent by weight.

## Example 5

The following monomers are used to make an addition interpolymer of the invention:

|  | Percent by Weight |
|---|---|
| Isobornyl methacrylate | 15.0 |
| Styrene | 25.0 |
| Butyl methacrylate | 20.0 |
| Methyl methacrylate | 20.0 |
| Gamma-methacryloxy-propyltrimethoxysilane | 20.0 |

A 4-neck flask equipped with condenser, stirrer, thermometer, 3 dropping funnels, and means for maintaining a nitrogen blanket is charged with 440.0 g of butyl acetate and heated to reflux, about 125 degrees C, while under a nitrogen blanket and agitation. Three feeds identified herein as A, B, and C are next gradually and simultaneously added to the vessel over a period of two hours while the contents of the vessel are maintained at reflux conditions. Feed A consists of a mixture of 348.0 g isobornyl methacrylate, 580.0 g styrene, 464.0 g butyl methacrylate, 464.0 g methyl methacrylate, and 464.0 g gamma-methacryloxypropyltrimethoxysilane. Feed B consists of a mixture of 264.0 g of butyl acetate and 116 g 2,2'-azobis-(2-methyl butane nitrile) available as VAZO—67 from E.I. DuPont de Nemours and Company. Feed C consists of 132.0 g butyl acetate and 116.0 g gamma-mercaptopropyltrimethoxysilane. After the addition of the three feeds A, B, and C is complete, a mixture of 22 g butyl acetate and 9.28 g VAZO—67 is added all at once to the vessel and the contents of the vessel held at reflux for 1 hour. Next, another mixture of 22 g butyl acetate and 9.28 g of the VAZO—67 is added all at once to the vessel and the contents of the vessel thereafter held at reflux for an additional 1½ hours after which period heating is discontinued and the contents of the vessel allowed to cool to room temperature.

The resultant product is an addition interpolymer of the invention.

The resultant product has a theoretical total solids content of 72.5 percent by weight, an experimentally determined total solids content at 150 degrees C for 1 hour of 69.5 percent by weight, a viscosity of 11.6 Stokes, an acid value of 0, a color value of 1, and a peak molecular weight of the addition interpolymer of 3386 as determined by gel permeation chromatography using a polystyrene standard. Analysis of the resultant product shows a content of butyl methacrylate of 0.52 percent by weight, a content of isobornyl methacrylate of 0.40 percent by weight and a content of styrene of 0.05 percent by weight.

9

## Example 6
The following monomers are used to make an addition interpolymer of the invention.

|  | Percent by Weight |
| --- | --- |
| Isobornyl methacrylate | 10.0 |
| Styrene | 30.0 |
| Butyl methacrylate | 20.0 |
| Methyl methacrylate | 20.0 |
| Gamma-methacryloxy-propyltrimethoxysilane | 20.0 |

A 4-neck flask equipped with condenser, stirrer, thermometer, 3 dropping funnels, and means for maintaining a nitrogen blanket is charged with 440.0 g of butyl acetate and heated to reflux, about 125 degrees C, while under a nitrogen blanket and agitation. Three feeds identified herein as A, B, and C are next gradually and simultaneously added to the vessel over a period of two hours while the contents of the vessel are maintained at reflux conditions. Feed A consists of a mixture of 232.0 g isobornyl methacrylate, 696.0 g styrene, 464.0 g butyl methacrylate, 464.0 g methyl methacrylate, and 464.0 g gamma-methacryloxypropyltrimethoxysilane. Feed B consists of a mixture of 264.0 g of butyl acetate and 116 g 2,2'-azobis-(2-methyl butane nitrile) available as VAZO—67 from E.I. DuPont de Nemours and Company. Feed C consists of 132.0 g butyl acetate and 116.0 g gamma-mercaptopropyltrimethoxysilane. After the addition of the three feeds A, B, and C is complete, a mixture of 22 g butyl acetate and 9.28 g VAZO—67 is added all at once to the vessel and the contents of the vessel held at reflux for 1 hour. Next, another mixture of 22 g butyl acetate and 9.28 g of the VAZO—67 is added all at once to the vessel and the contents of the vessel thereafter held at reflux for an additional $1\frac{1}{2}$ hours after which period heating is discontinued and the contents of the vessel allowed to cool to room temperature.

The resultant product is an addition interpolymer of the invention.

The resultant product has a theoretical total solids content of 72.5 percent by weight, an experimentally determined total solids content at 150 degrees C for 1 hour of 70.6 percent by weight, a viscosity of 13.7 Stokes, an acid value of 0, a color value of 1, and a peak molecular weight of the addition interpolymer of 3651 as determined by gel permeation chromatography using a polystyrene standard. Analysis of the resultant product shows a content of butyl methacrylate of 0.41 percent by weight, a content of isobornyl methacrylate of 0.22 percent by weight and a content of styrene of 0.05 percent by weight.

## Example 7
The following monomers are used to make an addition interpolymer of the invention:

|  | Percent by Weight |
| --- | --- |
| Isobornyl methacrylate | 40.0 |
| Styrene | 20.0 |
| Methyl methacrylate | 20.0 |
| Gamma-methacryloxy-propyltrimethoxysilane | 20.0 |

A 4-neck flask equipped with condenser, stirrer, thermometer, 3 dropping funnels, and means for maintaining a nitrogen blanket is charged with 440.0 g of butyl acetate and heated to reflux, about 125 degrees C, while under a nitrogen blanket and agitation. Three feeds identified herein as A, B, and C are next gradually and simultaneously added to the vessel over a period of two hours while the contents of the vessel are maintained at reflux conditions. Feed A consists of a mixture of 928.0 g isobornyl methacrylate, 464.0 g styrene, 464.0 g methyl methacrylate, and 464.0 g gamma-methacryloxypropyl trimethoxysilane. Feed B consists of a mixture of 264.0 g of butyl acetate and 116 g 2,2'-azobis-(2-methyl butane nitrile) available as VAZO—67 from E.I. Dupont de Nemours and Company. Feed C consists of 132.0 g butyl acetate and 116.0 g gamma-mercaptopropyl trimethoxysilane. After the addition of the three feeds A, B, and C is complete, a mixture of 22 g butyl acetate and 9.28 g VAZO—67 is added all at once to the vessel and the contents of the vessel held at reflux for 1 hour. Next, another mixture of 22 g butyl acetate and 9.28 g of the VAZO—67 is added all at once to the vessel and the contents of the vessel thereafter held at reflux for an

additional $1\frac{1}{2}$ hours after which period heating is discontinued and the contents of the vessel allowed to cool to room temperature.

The resultant product is an addition interpolymer of the invention.

The resultant product has a theoretical total solids content of 72.5 percent by weight, an experimentally determined total solids content at 150 degrees C for 1 hour of 68.6 percent by weight, a viscosity of 13.2 Stokes, an acid value of 0.0, a color value of 2, and a peak molecular weight of the addition interpolymer of 3119 as determined by gel permeation chromatography using a polystyrene standard. Analysis of the resultant product shows a content of methyl methacrylate of 0.56 percent by weight, a content of isobornyl methacrylate of 1.69 percent by weight and a content of styrene of 0.02 percent by weight.

## Example 8

The following monomers are used to make a comparative silane addition interpolymer for use in a clearcoating composition of Example 9.

|  | Percent by Weight |
| --- | --- |
| Methyl methacrylate | 40.0 |
| Styrene | 25.0 |
| Gamma-methacryloxy-propyltrimethoxysilane 2-Ethylhexyl methacrylate | 10.0 |

A 4-neck flask equipped with condenser, stirrer, thermometer, 3 dropping funnels, and means for maintaining a nitrogen blanket is charged with 448.0 g of butyl acetate, 192.0 g of VM & P Naphtha and 128.0 g of toluene and heated to reflux while under a nitrogen blanket and agitation. Three feeds identified herein as A, B, and C are next gradually and simultaneously added to the vessel over a period of two hours while the contents of the vessel are maintained at reflux conditions. Feed A consists of a mixture of 768.0 g methyl methacrylate, 480.0 g styrene, 480.0 g gamma-methacryloxypropyl trimethoxysilane and 192.0 g 2-ethylhexyl methacrylate. Feed B consists of a mixture of 224.0 g of butyl acetate and 96 g 2,2'-azobis-(2-methyl butane nitrile) available as VAZO—67 from E.I. Dupont de Nemours and Company. Feed C consists of 224.0 g butyl acetate and 96.0 g gamma-mercaptopropyl trimethoxysilane After the addition of the three feeds A, B and C is complete, a mixture of 32.0 g butyl acetate and 7.68 g VAZO—67 is added all at once to the vessel and the contents of the vessel held at reflux for 1 hour. Next, another mixture of 32 g butyl acetate and 7.68 g of the VAZO—67 is added all at once to the vessel and the contents of the vessel thereafter held at reflux for an additional $1\frac{1}{2}$ hours after which period heating is discontinued and the contents of the vessel allowed to cool to room temperature.

The resultant product is a comparative silane addition interpolymer.

The resultant product has a theoretical total solids content of 60.0 percent by weight, an experimentally determined total solids content at 150 degrees C for 1 hour of 58.0 percent by weight, a viscosity of 1.35 Stokes, an acid value of 0.2, a color value of 1−, and a peak molecular weight of the silane addition interpolymer of 3776 as determined by gel permeation chromatography using a polystyrene standard. Analysis of the resultant product shows a content of methyl methacrylate of 0.65 percent by weight, a content of 2-ethylhexyl methacrylate of 0.53 percent by weight and a content of styrene of 0.04 percent by weight.

## Example 9

This example illustrates advantages when addition interpolymers of the invention are utilized in clear topcoating (clearcoating) compositions applied over a basecoating composition in a "color plus clear" application.

(a) The formulations of the basecoating composition and clear coating compositions are as set forth in the following TABLES 1 and 2 respectively.

## TABLE 1

| Basecoating Composition | Weight (grams) |
| --- | --- |
| Methyl ethyl ketone | 20.5 |
| Butyl acetate | 36.9 |
| Diethylene glycol monobutyl ether acetate | 10.0 |
| Organoclay[1] | 0.9 |
| UV absorber[2] | 0.9 |
| Triethylorthoformate | 4.3 |
| Flow control agent[3] | 0.3 |
| Pattern control agent[4] | 40.0 |
| Acrylic silane solution[5] | 83.6 |
| Pigment paste[6] | 52.6 |

[1] Available as BENTONE SD—2 from NL Industries, Inc..

[2] Available from Ciba Geigy Corp as TINUVIN 328.

[3] Available as BYK 300 from BYK Mallinekrodt Chem. Produkte GmbH.

[4] A dispersion of organic polymer microparticles at 44 percent by weight solids in 56 percent by weight of a solvent mixture (containing 1.19 percent toluene, 2.67 percent VM & P naphtha, 6.91 percent butyl acetate, 26.95 percent ISOPAR E from EXXON Corp., and 62.93 percent heptane). The dispersion of organic polymer microparticles is prepared from 139.9 pbw of heptane, 59.9 pbw of ISOPAR E from EXXON Corp., 147.2 pbw of methylmethacrylate, 7.6 pbw of glycidylmethacrylate, 37.6 pbw of a dispersion stabilizer solution, 0.447 pbw of ARMEEN DMCD (dimethyl cocoamine), 1.081 pbw of VAZO 67 initiator, 1.592 pbw of n-octyl mercaptan, and 4.626 pbw of methyacrylic acid. The dispersion stabilizer solution contained 40 percent by weight solids and 60 percent by weight of a mixture of solvents. The dispersion stabilizer is a polymer prepared by graft polymerizing 49.5 percent by weight of a reaction product of 10.8 percent by weight of glycidyl methacrylate and 89.2 percent by weight of 12-hydroxystearic acid, with 45.4 percent by weight of methylmethacrylate and 4.2 percent by weight of glycidyl methacrylate, wherein the resulting copolymer product containing pendant epoxy groups is reacted with 0.9 percent by weight of methacrylic acid. The mixture of solvents of the dispersion stabilizer solution contains 68.5 percent by weight of butylacetate, 26.3 percent by weight of VM & P naphtha, and 5.2 percent by weight of toluene. The dispersion of organic polymer microparticles is prepared according to the teachings of United States patent No. 4,147,688.

[5] As made in Example 2.

[6] Prepared by combining 71.5 pbw of aluminum flake pigment, 41.9 pbw butyl acetate and 90.7 pbw of an acrylic polyol having a peak molecular weight of between 18,000 and 20,000 and a Gardner-Holdt viscosity of Y- (prepared from 30.0% by weight methyl methacrylate, 25.0% by weight styrene, 19.0% by weight butyl methacrylate, 12.0% by weight 2-ethylhexyl acrylate and 14.0% by weight 2-hydroxyethyl acrylate).

TABLE 2

| Clearcoating Composition | Weight (grams) | | | | |
|---|---|---|---|---|---|
| | A | B | C | D | E |
| Product of Example 3 | 137.5 | 0 | 0 | 0 | 0 |
| Product of Example 4 | 0 | 137.5 | 0 | 0 | 0 |
| Product of Example 5 | 0 | 0 | 137.5 | 0 | 0 |
| Product of Example 6 | 0 | 0 | 0 | 137.5 | 0 |
| Product of Example 7 | 0 | 0 | 0 | 0 | 137.5 |
| Cellulose acetate butyrate | 1.0 | 1.0 | 1.0 | 1.0 | 1.0 |
| Butyl acetate | 43.2 | 43.2 | 43.2 | 43.2 | 43.2 |
| UV absorber[1] | 2.0 | 2.0 | 2.0 | 2.0 | 2.0 |
| Polysiloxane solution[2] | 0.6 | 0.6 | 0.6 | 0.6 | 0.6 |
| Flow control agent[3] | 0.6 | 0.6 | 0.6 | 0.6 | 0.6 |
| Flow control agent[4] | 0.2 | 0.2 | 0.2 | 0.2 | 0.2 |
| Triethylorthoformate | 5.0 | 5.0 | 5.0 | 5.0 | 5.0 |
| Dibutyl tin dilaurate | 2.0 | 2.0 | 2.0 | 2.0 | 2.0 |
| Thinner[5] | 40.5 | 40.5 | 40.5 | 40.5 | 40.5 |
| Total weight | 232.6 | 232.6 | 232.6 | 232.6 | 232.6 |
| Percent Solids | 43.0 % | 43.0 % | 43.0 % | 43.0 % | 43.0 % |

TABLE 2 (continued)

| Clearcoating Composition | Weight (grams) | |
|---|---|---|
| | F (comparison) | G (comparison) |
| Product of Example 8 | 170.7 | 0 |
| Product of Example 2 | 0 | 148.6 |
| Cellulose acetate butyrate | 1.0 | 1.0 |
| Butyl acetate | 10.0 | 32.1 |
| UV absorber[1] | 2.0 | 2.0 |
| Polysiloxane solution[2] | 0.6 | 0.6 |
| Flow control agent[3] | 0.6 | 0.6 |
| Flow control agent[4] | 0.2 | 0.2 |
| Triethylorthoformate | 5.0 | 5.0 |
| Dibutyl tin dilaurate | 2.0 | 2.0 |
| Thinner[5] | 40.5 | 85.7 |
| Total weight | 232.6 | 277.8 |
| Percent Solids | 43.0 % | 36.0 % |

[1] Available from Ciba-Geigy Corp. as TINUVIN 328.

Notes to Table 2 (continued)

[2] The polysiloxane is available from DOW Corning Corporation as DC 200, 135 csk. Dissolved in xylene to give a 0.5 percent polysiloxane content.

[3] Available as BYK 300 from BYK Mallinekrodt Chem produkte GmbH.

[4] Available as MODAFLOW from Monsanto Industrial Chemicals Company.

[5] The thinner contains 23 percent butyl acetate, 6 percent ethyl acetate, 4 percent xylene, 25 percent VM & P naphtha, 24 percent toluene, 6 percent DOWANOL PM acetate from DOW CORNING Corp., and 11 percent HEXATE 100 from Shell Chemical Co., all percentages being by volume.

The basecoating composition (see TABLE I) is reduced 150 percent by volume with a lacquer thinner available as DTL—105 from DITZLER Automotive Finishes, PPG INDUSTRIES, INC. (i.e., 1 part by volume basecoating composition to 1.5 parts by volume lacquer thinner). The basecoating composition is spray applied to 24 gauge cold rolled steel panels (treated with BONDERITE 40, primed with a primer surfacer available as DZL—32 from DITZLER Automotive Finishes, PPG INDUSTRIES, INC., and sanded with No. 400 grit paper) to form the basecoats. The basecoats are allowed to flash for 15 minutes at room temperature. Immediately thereafter, the clearcoating compositions (see TABLE 2 above) are spray applied to the basecoats to form clear topcoats (clearcoats).

The basecoats and clearcoats are allowed to moisture cure at room temperature for 24 hours under ambient atmospheric conditions to the dry film thicknesses of the basecoats and topcoats as set forth in the following TABLE 3. Some properties of the resulting cured composite basecoat/clearcoats are as set forth in TABLE 3. These properties are determined after 24 hours and 120 hours respectively from when the clearcoating compositions are applied to the basecoats. In TABLE 3 the left and right hand entries represented with a slash inbetween (as in 4B/B) mean the respective values for the property determined after 24 hours and 120 hours respectively. "DFT BC" means "dry film thickness in mils of the basecoat", and "DFT CC" means "dry film thickness in mils of the clearcoat. "DOI" means "distinctness of image" measured 24 hours after application of the clearcoating composition to the basecoat. A film having a high distinctness of image when viewed from a direction close to the normal to the surface and under, for example, a light fixture such as a fluorescent light fixture having a cross-hatch grid in front of the bulb, exhibits a reflected image of the lighted fixture in the film which appears clear and sharply distinct and seems to originate deep in the film. "Tg" means the calculated glass transition temperature in degrees C for the acrylic silane interpolymer utilized in the clearcoating composition. "Gasoline soak" means resistance to deterioration by the composite film to soaking for 3 minutes in gasoline. For gasoline soak a rating of 1 means excellent; a rating of 1-means very good; and a rating of 2 means good.

## TABLE 3

| Example | 20 Degree Gloss | DOI | Tg | Pencil Hardness | Gasoline Soak | DFT BC | DFT CC |
|---------|-----------------|-----|-----|-----------------|---------------|--------|--------|
| A | 87/87 | 65 | 110 | 4B/B | 2/1 | 0.8 | 2.6 |
| B | 91/91 | 70 | 105 | 4B/B | 1/1 | 0.8 | 2.6 |
| C | 92/91 | 70 | 100 | 4B/B | 1-/1 | 0.8 | 2.5 |
| D | 93/93 | 80 | 97 | 4B/B | 1/1 | 0.8 | 2.6 |
| E | 93/93 | 85 | 120 | 4B/B | 1-/1 | 0.8 | 2.7 |
| F (Comp.) | 91/92 | 55 | 87 | 4B/B | 1/1 | 0.8 | 2.7 |
| G (Comp.) | 91/91 | 60 | 70 | 4B/B | 1/1 | 0.8 | 2.4 |

It would be expected that at lower Tg, their would be better flow and therefore better appearance, i.e., gloss and DOI, but also softer cured films. Surprisingly, the higher Tg materials which contain the isobornyl (meth)acrylate not only have excellent flow but even better appearance properties in addition to other advantageous properties for an ambient curing composition such as hardness.

## Claims

1. An addition interpolymer containing at least one silicon atom directly bonded to a hydrolyzable group, said addition interpolymer derived from a mixture of copolymerizable ethylenically unsaturated monomers comprising an isobornyl group-containing monomer selected from the group consisting of

14

isobornyl methacrylate, isobornyl acrylate and a mixture thereof; wherein the amount of said isobornyl group-containing monomer ranges from 10 percent to 60 percent by weight based on the total weight of said mixture of copolymerizable ethylenically unsaturated monomers.

2. The addition interpolymer of claim 1 which contains alkoxy silane groups and/or acyloxy silane groups and said mixture of monomers contains:

(i) one or more ethylenically unsaturated silicon-free monomers comprising said isobornyl group-containing monomer; and

(ii) a copolymerizable ethylenically unsaturated silane monomer selected from the group consisting of an alkoxy silane monomer, an acyloxy silane monomer, and a mixture thereof.

3. The addition interpolymer of claim 2 wherein the amount of said ethylenically unsaturated silicon-free monomers ranges from 50 percent to 95 percent by weight based on the total weight of said mixture of monomers, and the amount of said copolymerizable ethylenically unsaturated silane monomer ranges from 5 to 50 percent by weight based on the total weight of said mixture of monomers.

4. The addition interpolymer of claim 2 wherein said ethylenically unsaturated silicon-free monomers comprise an alkyl acrylate, alkyl methacrylate, vinyl aromatic hydrocarbon or a mixture thereof.

5. The addition interpolymer of claim 4 wherein said alkyl acrylate and alkyl methacrylate contain from 1 to 12 carbon atoms in the alkyl group.

6. The addition interpolymer of claim 4 wherein said vinyl aromatic hydrocarbon is styrene, vinyl toluene, alpha-methylstyrene or a mixture thereof.

7. The addition interpolymer of claim 4 wherein said silane monomer is a (meth)acrylatoalkoxysilane monomer having from 1 to 4 carbon atoms in the alkoxy group.

8. The addition interpolymer of claim 7 wherein said (meth)acrylatoalkoxysilane monomer is gamma-methacryloxypropyltrimethoxysilane, gamma-methacryloxypropyltriethoxysilane, or a mixture thereof.

9. The addition interpolymer of claim 2 having a peak molecular weight as determined by gel permeation chromatography ranging from 2,000 to 20,000.

10. The addition interpolymer of claim 9 having a calculated glass transition temperature of at least 25 degrees Celsius.

11. The addition interpolymer of claim 10 wherein said mixture of monomers contains from 70 percent to 90 percent by weight of said ethylenically unsaturated silicon-free monomers (i), from 10 percent to 30 percent by weight of said copolymerizable ethylenically unsaturated silane monomer (ii), and from 40 percent to 20 percent by weight of said isobornyl group-containing monomer, based on the total weight of said mixture of monomers, and wherein said addition interpolymer has a calculated glass transition temperature of from 30 degrees Celsius to 120 degrees Celsius.

12. The addition interpolymer of claim 9 which has been produced in the presence of a mercaptoalkyl trialkoxysilane as a chain transfer agent.

13. A coating composition comprising an addition interpolymer according to claims 1 through 12.

14. The coating composition of claim 13 additionally comprising an effective amount of a cure promoting catalyst.

15. The coating composition of claim 13 wherein the total solids content of said composition is at least 40 percent by weight when the viscosity of the composition is 25 seconds or less on a No. 4 Ford Cup.

16. A method of coating a substrate comprising the steps of:

(A) coating a substrate with one or more applications of a pigmented basecoating composition containing a film-forming resin to form a basecoat; and

(B) coating said basecoat with one or more applications of a topcoating composition comprising

(a) an addition interpolymer according to claim 1 containing at least one silicon atom directly bonded to a hydrolyzable group, said addition interpolymer derived from a mixture of copolymerizable ethylenically unsaturated monomers comprising an isobornyl group-containing monomer selected from the group consisting of isobornyl methacrylate, isobornyl acrylate and a mixture thereof; wherein the amount of said isobornyl group-containing monomer ranges from 10 percent to 60 percent by weight based on the total weight of said mixture of copolymerizable ethylenically unsaturated monomers; and

(b) an effective amount of a cure promoting catalyst.

17. The method of claim 16 wherein said addition interpolymer contains alkoxy silane groups and/or acyloxy silane groups and said mixture of monomers contains:

(i) one or more ethylenically unsaturated silicon-free monomers comprising said isobornyl group-containing monomer; and

(ii) a copolymerizable ethylenically unsaturated silane monomer selected from the group consisting of an alkoxy silane monomer, an acyloxy silane monomer, and a mixture thereof.

18. The method of claim 17 wherein the amount of said ethylenically unsaturated silicon-free monomers ranges from 50 percent to 95 percent by weight based on the total weight of said mixture of monomers, and the amount of said copolymerizable ethylenically unsaturated silane monomer ranges from 5 to 50 percent by weight based on the total weight of said mixture of monomers.

19. The method of claim 17 wherein said ethylenically unsaturated silicon-free monomers comprise an alkyl acrylate, alkyl methacrylate, vinyl aromatic hydrocarbon or a mixture thereof.

20. The method of claim 19 wherein said alkyl acrylate and alkyl methacrylate contain from 1 to 12 carbon atoms in tne alkyl group.

15

21. The method of claim 19 wherein said vinyl aromatic hydrocarbon is styrene, vinyl toluene, alpha-methylstyrene or a mixture thereof.

22. The method of claim 21 wherein said silane monomer is a (meth)acrylatoalkoxysilane monomer having from 1 to 4 carbon atoms in the alkoxy group.

23. The method of claim 22 wherein said (meth)acrylatoalkoxysilane monomer is gamma-methacryloxypropyltrimethoxysilane, gamma-methacryloxypropyltriethoxysilane, or a mixture thereof.

24. The method of claim 17 wherein said addition interpolymer of said topcoating composition has a peak molecular weight as determined by gel permeation chromatography of at least 2,000.

25. The method of claim 24 wherein said addition interpolymer of said topcoating composition has a calculated glass transition temperature of at least 25 degrees Celsius.

26. The method of claim 17 wherein said addition interpolymer of said topcoating composition has a peak molecular weight as determined by gel permeation chromatography ranging from 2,000 to 20,000 and has a calculated glass transition temperature of at least 25 degrees Celsius.

27. The method of claim 26 wherein said mixture of monomers contains from 70 percent to 90 percent by weight of said ethylenically unsaturated silicon-free monomers (i), from 10 percent to 30 percent by weight of said copolymerizable ethylenically unsaturated silane monomer (ii), and from 40 percent to 20 percent by weight of said isobornyl group-containing monomer, based on the total weight of said mixture of monomers, and wherein said addition interpolymer of said topcoating composition has a calculated glass transition temperature of from 30 degrees Celsius to 120 degrees Celsius.

28. The method of claim 24 wherein said interpolymer has been produced in the presence of a mercaptoalkyl trialkoxysilane as a chain transfer agent.

29. A method of coating a substrate comprising the steps of:

(1) coating a substrate with one or more applications of a pigmented basecoating composition comprising an addition interpolymer according to claim 1 containing at least one silicon atom directly bonded to a hydrolyzable group, said addition interpolymer derived from a mixture of copolymerizable ethylenically unsaturated monomers comprising an isobornyl group-containing monomer selected from the group consisting of isobornyl methacrylate, isobornyl acrylate and a mixture thereof; wherein the amount of said isobornyl group-containing monomer ranges from 10 percent to 60 percent by weight based on the total weight of said mixture of copolymerizable ethylenically unsaturated monomers, to form a basecoat; and

(2) coating said basecoat with one or more applications of a topcoating composition comprising a film-forming resin to form a clear topcoat.

30. The method of claim 29 wherein said addition interpolymer contains alkoxy silane groups and/or acyloxy silane groups and said mixture of monomers contains:

(i) one or more ethylenically unsaturated silicon-free monomers comprising said isobornyl group-containing monomer; and

(ii) a copolymerizable ethylenically unsaturated silane monomer selected from the group consisting of an alkoxy silane monomer, an acyloxy silane monomer, and a mixture thereof.

## Patentansprüche

1. Additionsmischpolymer, das mindestens ein direkt an eine hydrolisierbare Gruppe gebundenes Siliziumatom enthält, wobei das Additionsmischpolymer aus einer Mischung von copolymerisierbaren, ethylenisch ungesättigten Monomeren abgeleitet ist, enthaltend ein Isobornylgruppen aufweisendes Monomer, ausgewählt aus der Gruppe bestehend aus Isobornylmethacrylat, Isobornylacrylat und Mischungen derselben, wobei die Menge des Isobornylgruppen aufweisenden Monomeren von 10% bis 60 Gew.-%, bezogen auf Gesamtgewicht der Mischung von copolymerisierbaren, ethylenisch ungesättigten Monomeren, beträgt.

2. Additionsmischpolymer nach Anspruch 1, dadurch gekennzeichnet, daß es Alkoxysilangruppen und/oder Acyloxysilangruppen aufweist und die Monomermischung enthält:

(i) ein oder mehrere ethylenisch ungesättigte, siliziumfreie Monomere, in denen das Isobornylgruppen aufweisende Monomer enthalten ist, und

(ii) ein copolymerisierbares, ethylenisch ungesättigtes Silanmonomer, ausgewählt aus der Gruppe bestehend aus einem Alkoxysilanmonomer, einem Acyloxysilanmonomer und einer Mischung derselben.

3. Additionsmischpolymer nach Anspruch 2, dadurch gekennzeichnet, daß die Menge der ethylenisch ungesättigten siliziumfreien Monomeren von 50% bis 95 Gew.-%, bezogen auf Gesamtgewicht der Monomermischung, und die Menge des copolymerisierbaren, ethylenisch ungesättigten Silanmonomeren von 5 bis 50 Gew.-%, bezogen auf Gesamtgewicht der Monomermischung, beträgt.

4. Additionsmischpolymer nach Anspruch 2, dadurch gekennzeichnet, daß die ethylenisch ungesättigten, siliziumfreien Monomeren ein Alkylacrylat, Alkylmethacrylat, einen vinylaromatischen Kohlenwasserstoff oder eine Mischung derselben enthalten.

5. Additionsmischpolymer nach Anspruch 4, dadurch gekennzeichnet, daß das Alkylacrylat und Alkylmethacrylat 1 bis 12 Kohlenstoffatome in der Alkylgruppe aufweisen.

6. Additionsmischpolymer nach Anspruch 4, dadurch gekennzeichnet, daß der vinylaromatische Kohlenwasserstoff Styrol, Vinyltoluol, alpha-Methylstyrol oder eine Mischung derselben ist.

16

7. Additionsmischpolymer nach Anspruch 4, dadurch gekennzeichnet, daß das Silanmonomer ein (Meth)acrylatalkoxysilanmonomer mit 1 bis 4 Kohlenstoffatomen in der Alkoxygruppe ist.

8. Additionsmischpolymer nach Anspruch 7, dadurch gekennzeichnet, daß das (Meth)acrylatalkoxysilanmonomer gamma-Methacryloxypropyltrimethoxysilan, gamma-Methacryloxypropyltriethoxysilan oder eine Mischung derselben ist.

9. Additionsmischpolymer nach Anspruch 2, dadurch gekennzeichnet, daß es ein mittels Gelpermeationschromatographie bestimmtes Peakmolekulargewicht von 2.000 bis 20.000 aufweist.

10. Additionsmischpolymer nach Anspruch 9, dadurch gekennzeichnet, daß es eine berechnete Glasübergangstemperatur von mindestens 25°C aufweist.

11. Additionsmischpolymer nach Anspruch 10, dadurch gekennzeichnet, daß die Monomermischung enthält: von 70% bis 90 Gew.-% der ethylenisch ungesättigten siliziumfreien Monomeren (i), von 10% bis 30 Gew.-% des copolymerisierbaren, ethylenisch ungesättigten Silanmonomeren (ii) und 40% bis 20 Gew.-% des Isobornylgruppen aufweisenden Monomer, bezogen auf Gesamtgewicht der Monomermischung, und das Additionsmischpolymer eine berechnete Glasübergangstemperatur von 30°C bis 120°C aufweist.

12. Additionsmischpolymer nach Anspruch 9, dadurch gekennzeichnet, daß es in Gegenwart eines Mercaptoalkyltrialkoxysilans als Kettenübertragungsmittel hergestellt wurde.

13. Beschichtungszusammensetzung, dadurch gekennzeichnet, daß sie ein Additionsmischpolymer nach Ansprüchen 1 bis 12 enthält.

14. Beschichtungszusammensetzung nach Anspruch 13, dadurch gekennzeichnet, daß sie zusätzlich eine wirksame Menge eines die Härtung unterstützenden Katalysators enthält.

15. Beschichtungszusammensetzung nach Anspruch 13, dadurch gekennzeichnet, daß der Gesamtfeststoffgehalt der Zusammensetzung mindestens 40 Gew.-% beträgt, wenn die Viskosität der Zusammensetzung 25 Sekunden oder weniger, gemessen mit einem Ford Becher Nr. 4, beträgt.

16. Verfahren zum Beschichten eines Trägermaterials mit den Schritten:

(A) Aufbringen auf ein Trägermaterial eines oder mehrerer Aufträge einer ein filmbildendes Harz enthaltenden, pigmentierten Grundbeschichtungszusammensetzung, um eine Grundschicht auszubilden, und

(B) Aufbringen auf die Grundschicht eines oder mehrerer Aufträge einer Deckbeschichtungszusammensetzung enthaltend

(a) ein Additionsmischpolymer nach Anspruch 1, das mindestens ein direkt an eine hydrolisierbare Gruppe gebundenes Siliziumatom enthält, wobei das Additionsmischpolymer aus einer Mischung von copolymerisierbaren, ethylenisch ungesättigten Monomeren abgeleitet ist, enthaltend ein Isobornylgruppen aufweisendes Monomer, ausgewählt aus der Gruppe bestehend aus Isobornylmethacrylat, Isobornylacrylat und Mischungen derselben, wobei die Menge des Isobornylgruppen aufweisenden Monomeren von 10% bis 60 Gew.-%, bezogen auf Gesamtgewicht der Mischung von copolymerisierbaren, ethylenisch ungesättigten Monomeren, beträgt, und

(b) eine wirksame Menge eines die Härtung unterstützenden Katalysators.

17. Verfahren nach Anspruch 16, dadurch gekennzeichnet, daß das Additionsmischpolymer Alkoxysilangruppen und/oder Acyloxysilangruppen aufweist und die Monomermischung enthält:

(i) ein oder mehrere ethylenisch ungesättigte siliziumfreie Monomere, in denen das Isobornylgruppen aufweisende Monomer enthalten ist, und

(ii) ein copolymerisierbares, ethylenisch ungesättigtes Silanmonomer, ausgewählt aus der Gruppe bestehend aus einem Alkoxysilanmonomer, einem Acyloxysilanmonomer und einer Mischung derselben.

18. Verfahren nach Anspruch 17, dadurch gekennzeichnet, daß die Menge der ethylenisch ungesättigten siliziumfreien Monomeren von 50% bis 95 Gew.-%, bezogen auf Gesamtgewicht der Monomermischung, und die Menge des copolymerisierbaren, ethylenisch ungesättigten Silanmonomeren von 5 bis 50 Gew.-%, bezogen auf Gesamtgewicht der Monomermischung, beträgt.

19. Verfahren nach Anspruch 17, dadurch gekennzeichnet, daß die ethylenisch ungesättigten siliziumfreien Monomeren ein Alkylacrylat, Alkylmethacrylat, vinylaromatischen Kohlenwasserstoff oder eine Mischung derselben enthalten.

20. Verfahren nach Anspruch 19, dadurch gekennzeichnet, daß das Alkylacrylat und Alkylmethacrylat 1 bis 12 Kohlenstoffatome in der Alkylgruppe aufweisen.

21. Verfahren nach Anspruch 19, dadurch gekennzeichnet, daß der vinylaromatische Kohlenwasserstoff Styrol, Vinyltoluol, alpha-Methylstyrol oder eine Mischung derselben ist.

22. Verfahren nach Anspruch 21, dadurch gekennzeichnet, daß das Silanmonomer ein (Meth)acrylatalkoxysilanmonomer mit 1 bis 4 Kohlenstoffatomen in der Alkoxygruppe ist.

23. Verfahren nach Anspruch 22, dadurch gekennzeichnet, daß das (Meth)acrylatalkoxysilanmonomer gamma-Methacryloxypropyltrimethoxysilan, gamma-Methacryloxypropyltriethoxysilan oder eine Mischung derselben ist.

24. Verfahren nach Anspruch 17, dadurch gekennzeichnet, daß das Additionsmischpolymer der Deckschichtzusammensetzung ein durch Gelpermeationschromatographie bestimmtes Peakmolekulargewicht von mindestens 2.000 aufweist.

25. Verfahren nach Anspruch 24, dadurch gekennzeichnet, daß das Additionsmischpolymer der Deckbeschichtungszusammensetzung eine berechnete Glasübergangstemperatur von mindestens 25°C aufweist.

26. Verfahren nach Anspruch 17, dadurch gekennzeichnet, daß das Additionsmischpolymer der Deckbeschichtungszusammensetzung ein mittels Gelpermeationschromatographie bestimmtes Peakmolekulargewicht von 2.000 bis 20.000 und eine berechnete Glasübergangstemperatur von mindestens 25°C aufweist.

27. Verfahren nach Anspruch 26, dadurch gekennzeichnet, daß die Monomermischung enthält: von 70% bis 90 Gew.-% der ethylenisch ungesättigten siliziumfreien Monomeren (i), von 10% bis 30 Gew.-% des copolymerisierbaren, ethylenisch ungesättigten Silanmonomeren (ii) und von 40% bis 20 Gew.-% des Isobornylgruppen aufweisenden Monomer, bezogen auf Gesamtgewicht der Monomermischung, und das Additionsmischpolymer der Deckbeschichtungszusammensetzung eine berechnete Glasübergangstemperatur von 30°C bis 120°C aufweist.

28. Verfahren nach Anspruch 24, dadurch gekennzeichnet, daß das Mischpolymer in Gegenwart eines Mercaptoalkyltrialkoxysilans als Kettenübertragungsmittel hergestellt wurde.

29. Verfahren zum Beschichten eines Trägermaterials mit den Schritten:

(1) Aufbringen auf ein Trägermaterial einer oder mehrerer Aufträge einer ein Additionsmischpolymer nach Anspruch 1 enthaltenden, pigmentierten Grundbeschichtungszusammensetzung, wobei das Additionsmischpolymer mindestens ein direkt an eine hydrolisierbare Gruppe gebundenes Siliziumatom enthält und aus einer Mischung von copolymerisierbaren, ethylenisch ungesättigten Monomeren abgeleitet ist, enthaltend ein eine Isobornylgruppe aufweisendes Monomer, ausgewählt aus der Gruppe bestehend aus Isobornylmethacrylat, Isobornylacrylat und einer Mischung derselben, wobei die Menge des Isobornylgruppen aufweisenden Monomeren von 10% bis 60 Gew.-%, bezogen auf Gesamtgewicht der Mischung von copolymerisierbaren, ethylenisch ungesättigten Monomeren, beträgt, um eine Grundschicht auszubilden, und

(2) Aufbringen einer oder mehrerer Aufträge einer ein filmbildendes Harz enthaltenden Deckbeschichtungszusammensetzung auf die Grundschicht, um eine klare Deckschicht auszubilden.

30. Verfahren nach Anspruch 29, dadurch gekennzeichnet, daß das Additionsmischpolymer Alkoxysilangruppen und/oder Acyloxysilangruppen aufweist und die Monomermischung enthält:

(i) ein oder mehrere ethylenisch ungesättigte siliziumfreie Monomere, in denen das Isobornylgruppen aufweisende Monomer enthalten ist, und

(ii) ein copolymerisierbares, ethylenisch ungesättigtes Silanmonomer, ausgewählt aus der Gruppe bestehend aus einem Alkoxysilanmonomer, einem Acyloxysilanmonomer und einer Mischung derselben.

## Revendications

1. Interpolymère d'addition contenant au moins un atome de silice lié directement à un groupe hydrolysable, ledit interpolymère d'addition étant dérivé d'un mélange de monomères copolymérisables à insaturation éthylénique comportant un monomère renfermant un groupement isobornyle choisi dans le groupe constitué du méthacrylate d'isobornyle, de l'acrylate d'isobornyle et d'un mélange de ceux-ci; caractérisé en ce que la proportion dudit monomère renfermant le groupement isobornyle varie de 10% en poids à 60% en poids, basés sur le poids total dudit mélange de monomères copolymérisables à insaturation éthylénique.

2. Interpolymère d'addition selon la revendication 1, caractérisé en ce qu'il contient des groupements alcoxysilane et/ou acyloxysilane et en ce que ledit mélange de monomères contient:

(i) un ou plusieurs monomères à insaturation éthylénique et sans silicium, comportant ledit monomère renfermant un groupement isobornyle; et

(ii) un monomère de silane copolymérisable à insaturation éthylénique repris dans le groupe constitué par un monomère d'alcoxysilane, un monomère d'acyloxysilane, et un mélange de ceux-ci.

3. Interpolymère d'addition selon la revendication 2, caractérisé en ce que la proportion desdits monomères à insaturation éthylénique et sans silicium varie de 50% à 95% en poids, basés sur le poids total dudit mélange de monomères et en ce que la proportion dudit monomère copolymérisable de silane à insaturation éthylénique varie de 5 à 50% en poids, basés sur le poids total dudit mélange de monomères.

4. Interpolymère d'addition selon la revendication 2, caractérisé en ce que lesdits monomères à insaturation éthylénique et sans silicium englobent un acrylate d'alkyle, un méthacrylate d'alkyle, un hydrocarbure aromatique vinylique ou un mélange de ceux-ci.

5. Interpolymère d'addition selon la revendication 4, caractérisé en ce que le groupement alkyle desdits acrylate d'alkyle et méthacrylate d'alkyle contient de 1 à 12 atomes de carbone.

6. Interpolymère d'addition selon la revendication 4, caractérisé en ce que ledit hydrocarbure aromatique vinylique est le styrène, le vinyltoluène, l'α-méthylstyrène ou un mélange de ceux-ci.

7. Interpolymère d'addition selon la revendication 4, caractérisé en ce que ledit monomère de silane est un monomère de (méth)acrylatoalcoxysilane dont le groupe alcoxy possède 1 à 4 atomes de carbone.

8. Interpolymère d'addition selon la revendication 7, caractérisé en ce que ledit monomère de (méth)acrylatoalcoxysilane est le γ-méthacryloxypropyltriméthoxysilane, le γ-méthacryloxypropyltriéthoxysilane, ou un mélange de ceux-ci.

9. Interpolymère d'addition selon la revendication 2, caractérisé en ce qu'il possède un poids moléculaire maximum déterminé par chromatographie par perméation de gel, variant de 2000 à 20000.

10. Interpolymère d'addition selon la revendication 9, caractérisé en ce qu'il possède une température de transition vitreuse calculée d'au moins 25° Celsius.

11. Interpolymère d'addition selon la revendication 10, caractérisé en ce que ledit mélange de monomères contient de 70% à 90% en poids desdits monomères à insaturation éthylénique et sans silicium (i), de 10% en poids à 30% en poids dudit monomère copolymérisable de silane à insaturation éthylénique (ii) et, de 40% à 20% en poids, dudit monomère renfermant un groupement isobornyle, basés sur le poids total dudit mélange de monomères et en ce que ledit interpolymère d'addition possède une température de transition vitreuse calculée de 30° Celsius à 120° Celsius.

12. Interpolymère d'addition selon la revendication 9, caractérisé en ce qu'il a été produit en présence d'un mercaptoalkyltrialcoxysilane utilisé en qualité d'agent de transfert de chaîne.

13. Composition de revêtement renfermant un interpolymère d'addition selon les revendications 1 à 12.

14. Composition de revêtement selon la revendication 13 renfermant en outre une quantité efficace d'un catalyseur favorisant le durcissement.

15. Composition de revêtement selon la revendication 13, caractérisée en ce que la teneur totale en matière solide de ladite composition est d'au moins 40% en poids lorsque la viscosité de la composition est de 25 secondes ou moins, mesurée dans une cuvette Ford n° 4.

16. Procédé de revêtement d'un subjectile comprenant les étapes suivantes:

(A) le revêtement d'un subjectile à l'aide d'une ou plusieurs applications d'une composition de revêtement de base pigmentée contenant une résine filmogène de façon à former une couche de fond; et

(B) le revêtement de ladite couche de fond à l'aide d'une ou plusieurs applications d'une composition de couche de finition renfermant

(a) un interpolymère d'addition selon la revendication 1, contenant au moins un atome de silicium lié directement à un groupement hydrolysable, ledit interpolymère d'addition étant dérivé d'un mélange de monomères copolymérisables à insaturation éthylénique, comportant un monomère renfermant un groupement isobornyle choisi dans le groupe constitué du méthacrylate d'isobornyle, de l'acrylate d'isobornyle et d'un mélange de ceux-ci; où la proportion dudit monomère renfermant le groupement isobornyle varie de 10% en poids à 60% en poids, basé sur le poids total dudit mélange de monomères copolymérisables à insaturation éthylénique; et

(b) une quantité efficace d'un catalyseur favorisant le durcissement.

17. Procédé selon la revendication 16, caractérisé en ce que ledit interpolymère d'addition contient des groupements alcoxysilane et/ou des groupements acyloxysilane et en ce que le mélange de monomères contient:

(i) un ou plusieurs monomères à insaturation éthylénique et sans silicium, comportant ledit monomère renfermant un groupement isobornyle; et

(ii) un monomère copolymérisable de silane à insaturation éthylénique, choisi dans le groupe constitué par un monomère d'alcoxysilane, un monomère d'acyloxysilane et un mélange de ceux-ci.

18. Procédé selon la revendication 17, caractérisé en ce que la proportion desdits monomères à insaturation éthylénique et sans silicium varie de 50% en poids à 95% en poids, basés sur le poids total dudit mélange de monomères et en ce que la proportion dudit monomère de silane copolymérisable à insaturation éthylénique varie de 5 à 50% en poids, basés sur le poids total dudit mélange de monomères.

19. Procédé selon la revendication 17, caractérisé en ce que lesdits monomères à insaturation éthylénique et sans silicium sont constitués par un acrylate d'alkyle, un méthacrylate d'alkyle, un hydrocarbure aromatique vinylique ou un mélange de ceux-ci.

20. Procédé selon la revendication 19, caractérisé en ce que le groupe alkyle desdits acrylate d'alkyle et méthacrylate d'alkyle contient de 1 à 12 atomes de carbone.

21. Procédé selon la revendication 19, caractérisé en ce que ledit hydrocarbure aromatique vinylique est le styrène, le vinyltoluène, l'α-méthylstyrène ou un mélange de ceux-ci.

22. Procédé selon la revendication 21, caractérisé en ce que ledit monomère de silane est un monomère de (méth)-acrylatoalcoxysilane, dont le groupe alcoxy possède de 1 à 4 atomes de carbone.

23. Procédé selon la revendication 22, caractérisé en ce que ledit monomère de (méth)-acrylatoalcoxysilane est le γ-méthacryloxypropyltriméthoxysilane, le γ-méthacryloxypropyltriéthoxysilane, ou un mélange de ceux-ci.

24. Procédé selon la revendication 17, caractérisé en ce que ledit interpolymère d'addition de ladite composition de couche de finition possède un poids moléculaire moyen tel que déterminé par chromatographie par perméation de gel d'au moins 2000.

25. Procédé selon la revendication 24, caractérisé en ce que ledit interpolymère d'addition de ladite composition de revêtement de couche de finition possède une température de transition vitreuse calculée d'au moins 25° Celsius.

26. Procédé selon la revendication 17, caractérisé en ce que ledit interpolymère d'addition de ladite composition de couche de finition possède un poids moléculaire maximum tel que déterminé par chromatographie par perméation de gel variant de 2000 à 20000 et possède une température de transition vitreuse calculée d'au moins 25° Celsius.

27. Procédé selon la revendication 26, caractérisé en ce que ledit mélange de monomères contient de 70% à 90% en poids desdits monomères à insaturation éthylénique sans silicium (i), de 10% en poids à 30% en poids dudit monomère de silane copolymérisable à insaturation éthylénique (ii), et de 40% en poids à 20% en poids dudit monomère renfermant un groupement isobornyle, basé sur le poids total dudit mélange de monomères, et en ce que ledit interpolymère d'addition de ladite composition de couche de finition possède une température de transition vitreuse calculée de 30° Celsius à 120° Celsius.

28. Procédé selon la revendication 24, caractérisé en ce que ledit interpolymère a été préparé en présence de mercaptoalkyle-trialcoxyxilane utilisé comme agent de transfert de chaîne.

29. Procédé de revêtement d'un subjectile comprenant les étapes suivantes:

(1) le revêtement d'un subjectile à l'aide d'une ou plusieurs applications d'une composition pigmentée de couche de base renfermant un interpolymère d'addition selon la revendication 1, contenant au moins un atome de silicium lié directement à un groupement hydrolysable, ledit interpolymère d'addition étant dérivé d'un mélange d emonomères copolymérisables à insaturation éthylénique comportant un monomère renfermant un groupement isobornyle, choisi dans le groupe constitué du méthacrylate d'isobornyle, de l'acrylate d'isobornyle et d'un mélange de ceux-ci, où la proportion dudit monomère renfermant le groupement isobornyle varie de 10% en poids à 60% en poids, basés sur le poids total dudit mélange de monomères copolymérisables à insaturation éthylénique, de façon à former une couche de base; et

(2) le recouvrement de ladite couche de base à l'aide d'une ou plusieurs applications d'une composition de couche de finition comportant une résine filmogène de façon à former une couche de finition claire.

30. Procédé selon la revendication 29, caractérisé en ce que ledit interpolymère d'addition contient des groupements alcoxysilane et/ou acyloxysilane et en ce que ledit mélange de monomères contient:

(i) un ou plusieurs monomères à insaturation éthylénique et sans silicium comprenant ledit monomére renfermant un groupement isobornyle; et

(ii) un monomère de silane copolymérisable à insaturation éthylénique choisi dans le groupe constitué d'un monomère d'alcoxysilane, d'un monomère d'acyloxysilane et d'un mélange de ceux-ci.